# EUROPÄISCHE PATENTSCHRIFT

(11) **EP 1 414 608 B1**
(45) Veröffentlichungstag und Bekanntmachung des Hinweises auf die Patenterteilung: **24.10.2007**
(21) Anmeldenummer: 02758394.7
(22) Anmeldetag: 25.07.2002
(51) Int. Cl.: B23C 3/05, B23B 51/10

(54) **WERKZEUG UND VERFAHREN ZUR FERTIGBEARBEITUNG VON VENTILSITZ UND -FÜHRUNG**
TOOL AND METHOD FOR THE FINISHING OF VALVE SEATS AND GUIDES
OUTIL ET PROCEDE POUR LA FINITION DE SIEGES ET DE GUIDES DE SOUPAPES

(30) Priorität: 25.07.2001 DE 10137000
(43) Veröffentlichungstag der Anmeldung: 06.05.2004
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HÄBERLE, Friedrich, 73466 Lauchheim (DE)
(74) Vertreter: Gleiss, Alf-Olav
(86) Internationale Anmeldenummer: PCT/EP2002/008291
(87) Internationale Veröffentlichungsnummer: WO 2003/013771

(56) Entgegenhaltungen:
- EP-A- 0 467 372
- FR-A- 2 270 975
- US-A- 1 554 669

## Beschreibung

Die Erfindung betrifft ein Werkzeug zur Fertigbearbeitung von Ventilsitz und -führung in einem Zylinderkopf einer Brennkraftmaschine gemäß Oberbegriff des Anspruchs 1, außerdem ein Verfahren zur Fertigbearbeitung von Ventilsitz- und -führung in einem Zylinderkopf einer Brennkraftmaschine gemäß Oberbegriff des Anspruchs 6. Ein Werkzung dieser Art ist z.B.aus EP-A-0 467 372 bekannt.

Werkzeuge und Verfahren zur Fertigbearbeitung von Ventilsitz und -führung sind bekannt. Bei dieser Bearbeitung handelt es sich um eine der anspruchsvollsten Bearbeitungen im Zylinderkopf. Besonders die Koaxialität zwischen Ventilsitz und Ventilbohrung ist ein Kriterium für die Dichtheit und damit für den Verbrauch der Brennkraftmaschine. Um die geforderten Genauigkeiten, die üblicherweise im Bereich von maximal 0,025 mm liegen, zu erreichen, gibt es bisher unterschiedliche Methoden.

Bei der Bearbeitung von Ventilsitz und -führung auf einem Bearbeitungszentrum werden bei bekannten Verfahren je nach Durchmesser der Ventilführung mindestens zwei, bei sehr kleinen Durchmessern sogar drei Werkzeuge eingesetzt. Mit Hilfe eines der Werkzeuge wird eine sogenannte Pilotbohrung hergestellt, in der sich das nachfolgend eingesetzte Fertigbearbeitungswerkzeug beim Anschneiden führt. Die Bearbeitungszeit ist dabei relativ lang, da zunächst die Pilotbohrung hergestellt werden muss, dann ein Werkzeugwechsel erfolgt, bevor schließlich die Fertigbearbeitung durchgeführt werden kann.

Ein anderes Verfahren wird auf Transferstrassen durchgeführt. Um hierbei die für die Bearbeitung der Ventilführung erforderliche Steifigkeit des dazu verwendeten Werkzeugs zu erreichen, wird eine sogenannte Feed out-Spindel eingesetzt, die zwei Werkzeuge umfasst. Dabei ist ein dünnes für die Ventilführung vorgesehenes Werkzeug innerhalb eines anderen verlagerbar. Es wird durch eine Buchse geführt.

Es hat sich herausgestellt, dass die Bearbeitungszeiten auf einem Bearbeitungszentrum zu lang sind und dass bei der Bearbeitung innerhalb einer Transferstrasse sehr aufwendige Werkzeuge eingesetzt werden müssen, um möglichst die geforderten Genauigkeiten bei der Bearbeitung von Ventilsitz und -führung zu erreichen.

Aufgabe der Erfindung ist es daher, ein Werkzeug und ein Verfahren zur Fertigbearbeitung von Ventilsitz und -führung in einem Zylinderblock einer Brennkraftmaschine zur Verfügung zu stellen, die diese Nachteile nicht aufweisen.

Zur Lösung dieser Aufgabe wird ein Werkzeug vorgeschlagen, das die in Anspruch 1 genannten Merkmale aufweist. Es zeichnet sich dadurch aus, dass zwischen einem ersten Abschnitt des Werkzeugs, der der Bearbeitung des Ventilsitzes dient, und einem zweiten Abschnitt, der der Bearbeitung der Ventilführung dient, eine Trennstelle, die einen Kegel und eine diesen aufnehmende Kegelausnehmung umfasst, vorgesehen ist. Durch diese Trennstelle wird die Steifigkeit des Werkzeugs wesentlich erhöht. Außerdem ist der Aufbau wesentlich einfacher und kostengünstiger realisierbar, als dies bei Feed out-Werkzeugen der Fall ist.

Weitere Ausgestaltungen ergeben sich aus den Unteransprüchen.

Zur Lösung dieser Aufgabe wird auch ein Verfahren zur Fertigbearbeitung von Ventilsitz und -führung in einem Zylinderblock einer Brennkraftmaschine vorgeschlagen, das die in Anspruch 6 genannten Merkmale umfasst. Es zeichnet sich dadurch aus, dass die Fertigbearbeitung mittels eines einzigen Werkzeugs erfolgt. Es ist also nicht erforderlich, mit einem Vorbearbeitungswerkzeug eine Pilotbohrung für die Fertigbearbeitung zu erzeugen. Außerdem bedarf es keiner Führungsbuchse, um die Fertigbearbeitung durchzuführen.

Eine bevorzugte Ausführungsform des Verfahrens zeichnet sich dadurch aus, dass die Fertigbearbeitung in einem einzigen Bearbeitungsschritt erfolgt. Es bedarf also keiner Vor- und Fertigbearbeitung, um Ventilsitz und-führung im Zylinderblock herzustellen.

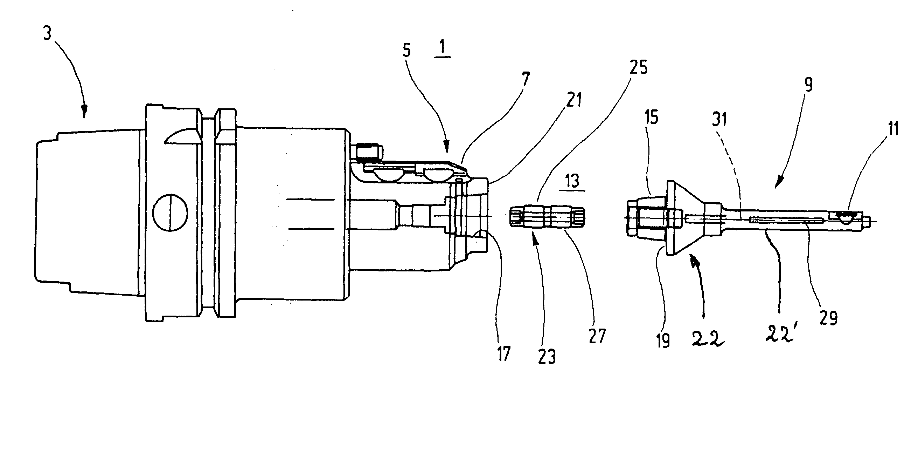

Die Erfindung wird im Folgenden anhand der Zeichnung näher erläutert. Die einzige Figur zeigt ein Werkzeug 1 in Seitenansicht und zwar als Explosionsdarstellung. Das Werkzeug 1 umfasst einen üblichen Schaft 3, der eine leicht konische Außenkontur hat und der Kopplung mit einer Werkzeugmaschine dient.

Das Werkzeug 1 umfasst einen ersten Abschnitt 5 mit mindestens einer ersten Messerplatte 7, die eine Schneide zur Bearbeitung des Ventilsitzes umfasst.

Das Werkzeug 1 umfasst außerdem einen zweiten Abschnitt 9 mit einer zweiten Messerplatte 11, die eine Schneide zur Bearbeitung der Ventilführung aufweist. Die beiden Abschnitte 5 und 9 des Werkzeugs 1 sind über eine Trennstelle 13 miteinander verbunden. Diese umfasst einen dem zweiten Abschnitt 9 zugeordneten Kegel 15, der in eine Kegelausnehmung 17 einführbar ist, die im ersten Abschnitt 5 des Werkzeugs 1 vorgesehen ist. Dem Kegel 15 ist eine erste Planfläche 19 und der Kegelausnehmung 17 eine zweite Planfläche 21 zugeordnet. Die Abschnitte 5 und 9 des Werkzeugs 1 liegen im Bereich der Trennstelle 13 im montierten Zustand fest aneinander, so dass sich eine definierte Ausrichtung des zweiten Abschnitts 9 gegenüber dem ersten Abschnitt 5 ergibt. Durch den Kegel 15 und die Kegelausnehmung 19 wird sichergestellt, dass die beiden Abschnitte 5 und 9 exakt koaxial zueinander angeordnet sind.

Die Planflächen 19 und 21 sind vorzugsweise als Ringflächen ausgebildet, um eine umlaufende Anlagefläche für die beiden Abschnitte 5 und 9 des Werkzeugs 1 im Bereich der Trennstelle 13 zu gewährleisten.

Die Figur zeigt, dass der zweite Abschnitt 9 ausgehend von der ersten Planfläche 19 einen verbreiterten Bereich 22 aufweist, der zwischen der ersten Planfläche 19 mit einem größeren Außendurchmesser und dem eigentlichen Werkzeug 22' des zweiten Abschnitts 9 liegt und hier beispielsweise unmittelbar angrenzend an die erste Planfläche 19 einen zylindrischen Abschnitt aufweist, der in einen sich in Richtung zur Messerplatte 11 konisch verjüngenden Abschnitt übergeht. Es kann sich ein weiterer Abschnitt mit zylindrischer Außenfläche anschließen, dessen Außendurchmesser größer ist als der des eigentlichen Werkzeugs 22', das der Bearbeitung der Ventilführung dient.

Der auch als Bund bezeichnete verbreiterte Bereich 22 ist aus demselben Material hergestellt, wie das eigentliche Werkzeug 22', um eine optimale Steifigkeit des Werkzeugs und ein reduziertes Schwingungsverhalten zu erzielen.

Die Trennstelle 13 umfasst eine Spannschraube 23 mit zwei Gewindeabschnitten 25 und 27, die gegenläufige Gewinde umfassen. Die Spannschraube 23 dient dazu, die beiden Elemente der Trennstelle 13, also die beiden Abschnitte 5 und 9 des Werkzeugs 1 fest miteinander zu verspannen. Beim Lösen der Spannschraube 23 werden die beiden Abschnitte 5 und 9 des Werkzeugs 1 auseinandergedrückt, so dass Klemmkräfte zwischen Kegel 15 und Kegelausnehmung 17 gelöst werden.

Zur Fertigbearbeitung von Ventilsitz und -führung in einem Zylinderblock einer Brennkraftmaschine werden die beiden Abschnitte 5 und 9 des Werkzeugs 1 im Bereich der Trennstelle 13 fest miteinander verspannt, so dass der Kegel 15 in der Kegelausnehmung 17 aufgenommen ist und die beiden Planflächen 19 und 21 fest aneinander liegen. Damit erzielt man eine hohe Steifigkeit des Werkzeugs 1 und eine absolut genaue Längspositionierung der Abschnitte 5 und 9 zueinander.

Der zweite Abschnitt 9 des Werkzeugs 1 ist als Reibahle ausgebildet, die der Bearbeitung der Ventilführung dient. Üblicherweise sind im Bereich des zweiten Abschnittes 9 außer der zweiten Messerplatte auch mindestens eine Führungsleiste vorgesehen, von der hier eine dem Betrachter zugewandte Führungsleiste 29 erkennbar ist.

Wesentlich für das hier beschriebene Werkzeug ist, dass der erste Abschnitt 5 und der zweite Abschnitt 9 aus unterschiedlichen Materialien gefertigt sind, wobei für den ersten Abschnitt 5, der der Bearbeitung des Ventilsitzes dient, vorzugsweise Stahl verwendet wird, und für den zweiten Abschnitt, der der Bearbeitung der Ventilführung dient, Hartmetall.

Hartmetall hat gegenüber Stahl einen höheren Elastizitätsmodul. Vorzugsweise werden Hartmetalle eingesetzt, die einen zwei- bis dreifach höheren Elastizitätsmodul gegenüber Stahl haben. Der aus Stahl bestehende erste Abschnitt 5 dehnt beziehungsweise verformt sich bei gleicher Bauteilgeometrie und gleicher Belastung daher zwei- bis dreimal so stark wie der aus Hartmetall bestehende zweite Abschnitt 9.

Dadurch, dass der lange und schlanke zweite Abschnitt 9 des Werkzeugs 1 aus Hartmetall besteht, wird hier eine hohe Steifigkeit erreicht. Die Steifigkeit des gesamten Werkzeugs 1 wird durch die Kombination der hier beschriebenen Materialien noch zusätzlich erhöht.

Dadurch, dass zwischen dem ersten Abschnitt 5 und dem zweiten Abschnitt 9 des Werkzeugs 1 eine Trennstelle 13 vorgesehen ist, was zu einer Unterbrechung des Faserverlaufs innerhalb des Werkzeugs 1 führt, werden Schwingungen, die durch die Zerspanung eines Werkstücks in das Werkzeug 1 eingeleitet werden, besonders gut gedämpft.

Durch die hohe Steifigkeit des Werkzeugs 1, die auf der speziellen Materialkombination und auf dem verbreiterten Bereich 22 des zweiten Abschnitts 9 beruht, und durch die Unterbrechung des Faserverlaufs mittels der Trennstelle 13 ergeben sich besonders gute Bearbeitungsqualitäten bei der Bearbeitung des Ventilsitzes und der Ventilführung mittels des hier beschriebenen Werkzeugs 1. Die hohe Steifigkeit des Werkzeugs 1 wird noch durch den kurzen Kegel 15 und die beiden Planflächen 19 und 21 erhöht, außerdem durch die Verwendung des Hartmetalls im Bereich des zweiten Abschnitts 9.

Im Folgenden wird auf die Funktion des Werkzeugs 1 und auf das Verfahren zur Fertigbearbeitung von Ventilsitz und -führung in einem Zylinderblock einer Brennkraftmaschine näher eingegangen:

Zur Fertigbearbeitung der beiden genannten Bereiche innerhalb eines Zylinderblocks wird das zusammengesetzte Werkzeug 1 in Rotation versetzt und führt außerdem gegenüber dem Zylinderblock eine Relativbewegung aus: Es wird in Richtung seiner Drehachse 31 verlagert, so dass der zweite Abschnitt 9 mit der zweiten Messerplatte 11 in die der Ventilführung dienenden Bohrung eingefahren wird. Dabei wird die Bohrungsoberfläche fertig bearbeitet. Schließlich ist das Werkzeug 1 so weit in den Zylinderblock eingefahren, dass die erste Messerplatte 7 des ersten Abschnitts 5 mit dem Zylinderblock in Eingriff tritt und den Ventilsitz fertig bearbeitet.

Zur Fertigbearbeitung von Ventilsitz und -führung in einem Zylinderblock bedarf es also nur eines einzigen Werkzeugs 1 mit dem hier erläuterten Aufbau. Es ist in keiner Weise erforderlich, in den Zylinderblock eine Pilotbohrung einzubringen, um die Fertigbearbeitung durchzuführen. Außerdem ist es nicht nötig, eine Führungsbuchse einzusetzen, um beim Einfahren des Werkzeugs 1 in die der Ventilführung dienenden Bohrung eine Führung zu gewährleisten. Das Werkzeug 1 ist aufgrund seines Aufbaus, nämlich aufgrund der Trennstelle 13 zwischen dem ersten Abschnitt 5 und dem zweiten Abschnitt 9 so steif, dass die Ventilführung optimal koaxial zum Ventilsitz angeordnet ist. Eine Durchbiegung des Werkzeugs 1 im Bereich des zweiten Abschnitts 9 ist gegenüber einteiligen Werkzeugen deutlich reduziert, weil eben die Steifigkeit des Werkzeugs 1 durch die Trennstelle 13 und durch die Verwendung von Hartmetall für den zweiten Abschnitt 9 wesentlich erhöht wird.

Bei der Fertigbearbeitung von Ventilsitz und -führung wird ein exakter Rundlauf des Werkzeugs 1 erreicht, weil der Kegel 15 und die Kegelausnehmung 17 so wie die Planflächen 19 und 21 mit sehr engen Toleranzen herstellbar sind. Durch die exakte Rundlaufgenauigkeit, die < 3 *µ*m beträgt, entfallen Ausricht- und Unwuchtprobleme.

Die Oberflächenqualitäten von Ventilsitz und -führung werden noch dadurch erhöht, dass bei der Feinbearbeitung auftretende Schwingungen innerhalb des Werkzeugs 1 durch die Trennstelle 13, also an der Übergangsstelle zwischen dem zweiten Abschnitt 9 und dem ersten Abschnitt 5 unterbrochen und damit besonders stark gedämpft werden. Die Schwingungen können auch noch dadurch reduziert werden, dass bei der Herstellung der beiden Abschnitte 5 und 9 des Werkzeugs 1 unterschiedliche Materialien einsetzbar sind.

Der zweite Abschnitt 9 des Werkzeugs 1 ist separat herstellbar. Dadurch ist die Qualität des Werkzeugs 1, insbesondere bei kleinen Bearbeitungsdurchmessern, wesentlich höher als dies bei herkömmlichen, einteiligen Werkzeugen der Fall ist.

Aus den Erläuterungen zum Werkzeug 1 und zu dessen Funktionsweise wird deutlich, dass das Werkzeug sehr einfach aufgebaut ist und damit kostengünstig realisiert werden kann. Der einfache Aufbau besteht unter anderem darin, dass nicht zwei zueinander bewegliche Teilwerkzeuge erforderlich sind, wie dies bei Feed out-Werkzeugen der Fall ist. Das Werkzeug zeichnet sich dadurch aus, dass die Bearbeitung von Ventilsitz und -führung im Zylinderkopf einer Brennkraftmaschine auf einfache Weise möglich ist: Die Bearbeitung kann mit einem einzigen Werkzeug durchgeführt werden. Es ist also nicht erforderlich komplizierte zweiteilige Werkzeuge zu verwenden, sogenannte Feed out-Werkzeuge, deren gegeneinander verlagerbare Teilwerkzeuge während der Bearbeitung von Ventilsitz und -führung getrennt angesteuert werden müssen. Darüber hinaus ist es möglich, die Fertigbearbeitung von Ventilsitz und -führung in einem Zylinderkopf einer Brennkraftmaschine in einem einzigen Bearbeitungsschritt durchzuführen: Es ist also auch nicht erforderlich, zunächst eine Pilotbohrung herzustellen, die dann die nachfolgende Fertigbearbeitung ermöglicht.

Der einfache Aufbau des Werkzeugs 1 ermöglicht es überdies, innerhalb einer Transferstrasse verschiedene Zylinderköpfe zu bearbeiten. Dies ist deshalb möglich, weil das hier beschriebene Werkzeug einfach automatisch gewechselt werden kann.

Schließlich ist auch ein universeller Einsatz des Werkzeuges 1 möglich, einerseits weil Werkstoffe zur Herstellung des ersten Abschnitts 5 und des zweiten Abschnitts 9 auf verschiedene Einsatzfälle optimal abgestimmt werden können. Es ist also möglich, durch die Wahl spezieller dämpfender Werkzeuge die Schwingungen innerhalb des Werkzeugs 1 zu reduzieren, die bereits durch den Einsatz der Trennstelle 13 deutlich vermindert werden.

Außerdem können Werkzeuge mit unterschiedlichen Abschnitten 5 und 9 eingesetzt werden. Es ist also auf einfache Weise möglich, Ventilsitze und -führungen mit unterschiedlichen Durchmessern einer Fertigbearbeitung zu unterziehen, weil erste Abschnitte 5 und zweite Abschnitte 9 mit unterschiedlichen Bearbeitungsdurchmessern miteinander kombiniert werden können. Durch die engen Toleranzen an dem Kegel 15 und den Planflächen 19 und 21 ergibt sich eine hohe Wiederholungsgenauigkeit beim Zusammenbau verschiedener Abschnitte eines Werkzeugs. Außerdem bleiben in jedem Fall die hohe Steifigkeit und die guten Dämpfungseigenschaften des Werkzeugs erhalten.

## Patentansprüche

1. Werkzeug zur Fertigbearbeitung von Ventilsitz und -führung in einem Zylinderkopf einer Brennkraftmaschine eines Kraftfahrzeugs mit einem mindestens eine erste Schneide (7) aufweisenden ersten Abschnitt (5) zur Bearbeitung des Ventilsitzes, mit einem mindestens eine zweite Schneide (11) aufweisenden zweiten Abschnitt (9) zur Bearbeitung der Ventilführung und mit einer Trennstelle (13) zwischen dem ersten Abschnitt (5) und dem zweiten Abschnitt (9), **dadurch gekennzeichnet, dass** die Trennstelle (13) einen Kegel (15) und eine diesen aufnehmende Kegelausnehmung (17) umfasst und dass die Abschnitte (5,9) des Werkzeugs (1) aus unterschiedlichen Materialien hergestellt sind, wobei für den ersten Abschnitt (5) vorzugsweise Stahl und für den zweiten Abschnitt (9) vorzugsweise Hartmetall verwendet wird.

2. Werkzeug nach Anspruch 1, **dadurch gekennzeichnet, dass** die Trennstelle (13) zwei Planflächen (19,21) umfasst, von denen eine erste (19) dem ersten Abschnitt (5) und eine zweite (21) dem zweiten Abschnitt (9) zugeordnet ist.

3. Werkzeug nach Anspruch 1 oder 2, **dadurch gekennzeichnet, dass** die erste Planfläche (19) und/oder die zweite Planfläche (21) als Ringflächen ausgebildet sind/ist.

4. Werkzeug nach einem der vorhergehenden Ansprüche, **dadurch gekennzeichnet, dass** der zweite Abschnitt (9) einen verbreiterten Bereich (22) aufweist, der vorzugsweise an die Trennstelle (13) angrenzt.

5. Verfahren zur Fertigbearbeitung von Ventilsitz und -führung im Zylinderkopf einer Brennkraftmaschine eines Kraftfahrzeugs mittels eines Werkzeugs, das einen mindestens eine erste Schneide aufweisenden ersten Abschnitt und einen mindestens eine zweite Schneide aufweisenden zweiten Abschnitt umfasst, mittels eines Werkzeugs nach einem der vorhergehenden Ansprüche 1 bis 4, **dadurch gekennzeichnet, dass** die Fertigbearbeitung mittels eines einzigen Werkzeugs erfolgt.

6. Verfahren nach Anspruch 5, **dadurch gekennzeichnet, dass** die Fertigbearbeitung in einem einzigen Bearbeitungsschritt erfolgt.

## Claims

1. Tool for final machining of a valve seat and valve guide in the cylinder head of a combustion engine of a motor vehicle, said tool having a first section (5) provided with at least one first blade (7) for machining the valve seat, and a second section (9) provided with at least one second blade (11) for machining the valve guide, and a separation site (13) provided between the first section (5) and the second section (9), **characterized in that** said separation site (13) comprises a cone (15) and a conical recess (17) capable of receiving said cone and that the sections (5, 9) of the tool (1) can be made of different materials, steel preferably being used for the first section (5) and hard metal for the second section (9).

2. Tool according to Claim 1, **characterized in that** the separation site (13) comprises two plane surfaces (19, 21) of which the first one (19) is disposed on the first section (5) and the second one (21) is disposed on the second section (9).

3. Tool according to Claim 1 or 2, **characterized in that** the first plane surface (19) and/or the second plane surface (21) have the shape of an annular surface.

4. Tool according to one of the preceding claims, **characterized in that** the second section (9) has a widened region (22) which is preferably adjacent to the separation site (13).

5. Method for final machining of a valve seat and a valve guide in the cylinder head of a combustion engine of a motor vehicle by means of a tool comprising a first section provided with at least one first blade and a second section provided with at least one second blade, by means of a tool according to one of the preceding claims 1 to 4, **characterized in that** the final machining is carried out with a single tool.

6. Method according to Claim 5, **characterized in that** the final machining is performed in a single step.

## Revendications

1. Outil de finition de sièges et de guides de soupapes dans la tête cylindrique d'un moteur à combustion interne de véhicule automobile avec un premier segment (5) présentant au moins une première lame (7) pour le traitement du siège de soupape, avec un deuxième segment (9) présentant au moins une deuxième lame (11) pour le traitement du guide de soupape et avec un point de séparation (13) entre le premier segment (5) et le deuxième segment (9), **caractérisé en ce que** le point de séparation (13) comprend un cône (15) et un évidement de cône (17) la recevant et que les segments (5, 9) de l'outil (1) sont fabriqués à partir de différents matériaux, l'acier étant de préférence utilisé pour le premier segment (5) et un métal dur étant de préférence utilisé pour le second segment (9).

2. Outil selon la revendication 1, **caractérisé en ce que** le point de séparation (13) comporte deux surfaces planes (19, 21) parmi lesquelles une première (19) est associée au premier segment (5) et une seconde (21) est associée au second segment (9).

3. Outil selon la revendication 1 ou 2, **caractérisé en ce que** la première surface plane (19) et/ou la seconde surface plane (21) prennent la forme de surfaces annulaires.

4. Outil selon l'une quelconque des revendications précédentes, **caractérisé en ce que** le second segment (9) comporte une zone (22) élargie de préférence contiguë au point de séparation (13).

5. Procédé de finition de sièges et de guides de soupapes dans la tête cylindrique d'un moteur à combustion interne de véhicule automobile au moyen d'un outil comprenant un premier segment comportant au moins une première lame et un second segment comportant au moins une seconde lame, à l'aide d'un outil selon l'une quelconque des revendications précédentes 1 à 4, **caractérisé en ce que** la finition est réalisée à l'aide d'un seul outil.

6. Procédé selon la revendication 5, **caractérisé en ce que** la finition est réalisée au cours d'une seule étape de traitement.
